# FASCICULE DE BREVET EUROPEEN

(11) **EP 4 260 002 B1**
(45) Date de publication et mention de la délivrance du brevet: **31.12.2025**
(21) Numéro de dépôt: 21830455.8
(22) Date de dépôt: 26.11.2021
(51) Int. Cl.: G01B 7/02, G01B 7/14, G01B 7/26, B60C 11/24

(54) **DISPOSITIF DE MESURE COMPRENANT UN SYSTÈME DE DÉCOUPLAGE MÉCANIQUE D'UN CAPTEUR À EFFET HALL**
MESSVORRICHTUNG MIT EINEM SYSTEM ZUR MECHANISCHEN ENTKOPPLUNG EINES HALL-EFFEKT-SENSORS
MEASUREMENT DEVICE COMPRISING A SYSTEM FOR MECHANICALLY UNCOUPLING A HALL EFFECT SENSOR

(30) Priorité: 10.12.2020 FR 2012958
(43) Date de publication de la demande: 18.10.2023
(73) Titulaire: COMPAGNIE GENERALE DES ETABLISSEMENTS MICHELIN, 63000 Clermont-Ferrand (FR)
(72) Inventeur: LEROY, Vianney, 63040 Clermont-Ferrand Cedex 9 (FR)
(74) Mandataire: M.F.P. Michelin
(86) Numéro de dépôt international: PCT/FR2021/052097
(87) Numéro de publication internationale: WO 2022/123137

(56) Documents cités:
- WO-A1-2006/106454
- WO-A1-2014/202747
- WO-A1-2021/055712
- FR-A1- 3 079 568
- US-A- 4 340 877

## Description

### Domaine de l'invention

La présente invention est relative à un dispositif de mesure de la distance entre deux surfaces sensiblement parallèles d'un objet, ledit dispositif comprenant un appareillage électronique incluant un capteur à effet Hall. Ledit dispositif comprend également un système de découplage mécanique qui isole l'objet à mesurer de l'appareillage de mesure de manière à supprimer les intectactions pouvant perturber la mesure.

### État de la technique

Le document WO 2014202747 décrit un système de mesure de l'épaisseur d'une couche de matériau caoutchouteux d'un pneumatique. Il prend la forme d'un boitier à fixer au sol. En utilisation, ce type de boitier est soumis à de fortes contraintes du fait de nombreux passages de véhicules de tous types, y compris des poids lourds. Malgré ces fortes contraintes, le boîtier ne doit pas se déplacer ou se soulever. Les boîtiers sont donc souvent fixés au sol grâce à des aménagements importants effectués dans le sol. Ces aménagements impliquent d'importants travaux, longs et coûteux. Par ailleurs, si jamais un boîtier s'avère être mal positionné, tout déplacement nécessite également d'importants travaux, avec des équipements lourds. Il existe donc un besoin pour permettre de fixer et repositionner facilement les boîtiers de mesure, avec une mise en oeuvre simplifiée.

Le document FR3007517 décrit un système de mesure de l'épaisseur d'une couche de gomme de pneumatique. Ce système utilise une source de champ magnétique statique et un élément de mesure du champ magnétique. Un tel système est prévu pour mise en place dans un boîtier sur lequel les véhicules roulent. Les mesures sont effectuées au moment du passage des roues sur le boîtier. Le boitier doit pouvoir résister à des charges importantes. Les contraintes de charge sont liées au nombre de véhicules roulant sur le boitier et à leur poids. Par ailleurs, des dysfonctionnements des différents éléments électroniques peuvent être provoqués notamment par des vibrations lors du passage des véhicules.

Pour pallier ces différents inconvénients, le document FR3079568B1 propose un système de fixation pour dispositif électronique, par exemple un capteur magnétique, dans un boîtier de mesure, par exemple de caractéristique de pneumatiques, qui permette un assemblage des éléments constituants sans jeu, ni risque de vibration. Mais à l'usage, cet assemblage est extrêmement sensible aux déformations et déplacements pendant la mesure. En effet, la mesure s'effectue sur une plage d'environ 2800 millivolts (mV), et le capteur présente une dérive de 5mV par micromètre (um) de déplacement relatif de l'aimant par rapport au composant effet Hall du circuit imprimé. Cet assemblage doit se trouver à moins de 4mm de la surface de mesure du corps mécanique du capteur, directement en contact avec les pneus des véhicules analysés, roulant à pleine charge. Dans ce contexte, il était difficile d'isoler totalement (<1um) l'assemblage capteur des déformations induites par les passages de véhicule.

Les inventeurs se sont donnés pour objectif d'améliorer le dispositif précédent pour isoler l'appareillage électronique de l'objet à mesurer de manière à supprimer les interactions pouvant perturber la mesure.

### Description brève de l'invention

Cet objectif a été atteint par un dispositif de mesure de la distance entre deux surfaces sensiblement parallèles d'un objet tel que défini par la revendication 1, et comprenant entre autres:
- Une cellule de mesure hermétique ayant au moins une surface plane, formant une surface de mesure, ladite cellule de mesure comportant un appareillage de mesure incluant une source de champ magnétique permanent, un circuit électronique muni d'un capteur à effet Hall, dont le signal de sortie est fonction du champ magnétique généré ;
- Ladite au moins une surface plane de la cellule de mesure étant destinée à venir en contact d'une surface plane de l'objet;
- La deuxième surface dudit objet sensiblement parallèle à la première surface dudit objet comprenant une composition à base de matériaux ferromagnétiques;
- Une variation du champ magnétique étant générée lors d'un appui de l'objet sur la cellule de mesure.

Ce dispositif comprend une cavité étanche remplie d'un volume d'air, aménagée entre l'appareillage de mesure et la surface de mesure de la cellule.

Le principe de l'invention s'inspire de l'effet de Hall pour mesurer la distance entre deux surfaces sensiblement parallèles d'un objet, l'une de deux surfaces comprenant une composition à base de matériaux ferromagnétiques. La source magnétique permanente du dispositif de mesure magnétise la surface de l'objet dotée d'une composition à base de matériaux ferromagnétiques. Le champ magnétique qui en est issu agit sur le circuit électronique de l'appareillage de la cellule de mesure pour produire un signal à la sortie du capteur à effet Hall en relation avec la distance à mesurer.

La caractéristique principale de l'invention est l'aménagement d'une couche d'air étanche dans la cavité de la cellule de mesure à proximité immédiate de la surface de mesure. Cette couche d'air étanche a la propriété d'isoler mécaniquement l'appareillage de mesure de la surface de mesure où l'objet prend aPPui.

Selon l'invention, la cavité étanche est délimitée par la surface intérieure de la cellule de mesure, et par une pièce d'étanchéité qui a un profil homothétique de celui de la cellule de mesure dans sa partie supérieure se trouvant en dessous de la surface de mesure, et ladite pièce d'étanchéité, dans sa partie inférieure adjacente à la surface de mesure, est munie d'un système d'accrochage étanche à la cellule de mesure.

Le dispositif selon l'invention comprend un guide de fixation exerçant un effort pour maintenir l'appareillage de mesure contre la pièce d'étanchéité dans sa portion centrale au plus près de la surface de mesure.

Selon un mode de réalisation préférentiel, la partie inférieure de la pièce d'étanchéité est noyée dans une résine.

Le mode de réalisation précédent conduit à une cellule de mesure qui présente les avantages de ne pas être constituée de parties métalliques qui pourraient perturber la mesure. Ce mode de réalisation est facilement accessible pour un faible coût industriel. L'encapsulement de l'appareillage électronique dans de la résine permet d'obtenir une durée de vie de la cellule de mesure encore plus importante.

D'autres modes de réalisation de l'invention sont liés aux choix de la source de champ magnétique permanent qui peut être constituée d'au moins une bobine alimentée par un courant électrique continu, ou encore constituée par une pluralité d'aimants permanents disposés en ligne.

Le dispositif de mesure l'invention a de nombreuses applications. A cet effet, la cellule de mesure peut être insérée à l'intérieur d'un boitier de mesure non conducteur électrique et dont les matériaux ont une susceptibilité magnétique nulle ou suffisamment faible pour être assimilable à de l'air ou du vide.

Avantageusement, le dispositif comprend une pluralité de cellules de mesure, alignées, installées dans un boitier de mesure de manière à coopérer pour mesurer la distance entre les deux surfaces surfaces sensiblement parallèles en plusieurs points de mesure.

Dans cette configuration, le boitier de mesure est disposé sur ou encastré dans un sol de roulage. Ce sera le cas quand ce dispositif est appliqué à la mesure de l'épaisseur de matériau caoutchouteux restante d'une bande de roulement d'un pneumatique.

De manière connue, la bande de roulement d'un pneumatique, qu'elle soit destinée à équiper un véhicule de tourisme ou un véhicule poids lourd, est pourvue d'une sculpture comprenant notamment des éléments de sculpture ou blocs élémentaires délimités par diverses rainures principales, longitudinales, transversales ou encore obliques, les blocs élémentaires pouvant en outre comporter diverses incisions ou lamelles plus fines. Les rainures constituent des canaux destinés à évacuer l'eau lors d'un roulage sur sol mouillé et définissent les bords d'attaque des éléments de sculpture.

Quand un pneumatique est neuf, la bande de roulement a sa hauteur maximale. Cette hauteur initiale peut varier en fonction du type de pneumatique considéré ainsi que de l'usage auquel il est destiné ; à titre d'exemple, les pneumatiques « hiver » ont généralement une profondeur de sculpture supérieure à celle de pneumatiques « été ». Lorsque le pneumatique s'use, la hauteur des blocs élémentaires de la sculpture diminue et la raideur de ces blocs élémentaires augmente. L'augmentation de raideur des blocs élémentaires de sculpture entraîne une diminution de certaines performances du pneumatique, telle l'adhérence sur sol mouillé. De plus, les capacités d'évacuation d'eau diminuent fortement lorsque la profondeur des canaux des sculptures diminue.

Il est donc souhaitable de pouvoir suivre l'évolution de l'usure de la bande de roulement d'un pneumatique. Le dispositif de l'invention est applicable au suivi de l'usure d'un pneumatique.

D'autres épaisseurs de matériaux du pneumatique sont accessibles à la mesure par le dispositif de l'invention. C'est le cas de la mesure de l'épaisseur de matériau caoutchouteux d'un flanc ou d'une gomme intérieure d'un pneumatique .

Avantageusement, dans le cas où le boitier de mesure dispose d'une alimentation électrique autonome, comme par exemple une batterie, le boitier de mesure est un boitier portatif.

Un autre objet divulgué, mais non revendiqué, par le présent brevet est un procédé de fabrication d'une cellule de mesure comprenant les étapes suivantes :
a. Usinage de la géométrie de la cellule de mesure ;
b. Positionnement d'une pièce d'étanchéité dans la cellule de mesure de manière à laisser un volume d'air entre ladite pièce d'étanchéité et le fonds de la cellule de mesure intérieur à la surface de mesure ;
c. Positionnement d'un appareillage électronique de mesure (circuit imprimé électronique, aimants toriques, capteur à effet Hall) dans la cellule de mesure par compression par une pièce d'étanchéité à l'aide d'un guide de fixation ;
d. Maintien de l'appareillage électronique dans sa position définitive par une plaque aimantée parallèle à la surface de mesure ;
e. Injection d'une résine dans la cellule de mesure ;
f. Fermeture de la cellule de mesure par résinage de manière à assurer son étanchéité.

Un objet supplémentaire divulgué, mais non revendiqué, par le présent brevet est un procédé de fabrication d'un boitier de mesure. Le circuit électronique incluant le capteur à effet Hall, et le circuit magnétique rendent prohibitive l'utilisation de composantes métalliques dans la fabrication du boitier de mesure. Des composantes métalliques pourraient perturber le fonctionnement de l'appareillage de mesure. Le montage des composantes pour obtenir le boitier de mesure doit être facile en usine sans engendrer de surcoût par rapport à l'existant. En substitution de composantes métalliques, des pièces d'injection plastique pourront être utilisées. Dans le même ordre d'idée, le résinage du boitier est envisageable de manière à assurer son étanchéité. Enfin, la fabrication du boitier de mesure doit être reproductible sans faire appel à un savoir-faire prticulier à développer, et l'assemblage des pièces doivent se faire aux tolérances standard. Un tel procédé comprend les étapes suivantes :
a. Usinage de la géométrie du boitier de mesure ;
b. Installation des cellules de mesure dans des cavités du boitier de mesure prévues à cet effet ;
c. Installation de capteurs piézoélectriques de détection de présence en bordure du boitier de mesure ;
d. Réalisation d'une connexion au réseau public d'électricité utilisant un transformateur pour fournir au boitier de mesure une alimentation électrique en courant continu ;
e. Installation d'une carte mère regroupant les composantes électroniques nécessaires au fonctionnement du boitier de mesure ;
f. Installation d'une infrastructure de communication radio (lecteur RFID, Antennes, réception/émission de données) ;
g. Utilisation d'aimants au néodyme pour la mise en place des cellules de mesure dans le boitier avant résinage ;
h. Fermeture étanche du boitier de mesure par résinage.

### Description des Figures

Les figures annexées illustrent le dispositif de mesure en précisant le lien entre les différentes composantes : la cellule de mesure, et le boitier de mesure. L'illustration concerne ici son application à la mesure de l'épaisseur de bandes de roulement de pneumatique :
- la figure 1 est une vue en perspective d'une cellule de mesure ;
- la figure 2 représente un boitier de mesure avec une pluralité de cellules de mesure ;
- la figure 3 est un grossissement du boitier de mesure ;
- la figure 4 représente un exemple d'application de l'invention pour la mesure de l'épaisseur restante d'une bande de roulement d'un pneumatique ;
- La figure 5 représente un méridien du pneumatique à mesurer représenté dans un repère cylindrique (O,r,y,t). Le plan méridien est repéré par les directions radiel (Or), et axiales (Oy). La direction circonférentielle (Ot) est orthogonale au plan méridien (O,r,y).
- La figure 6 est un grossissement de la partie entourée d'un cercle en pointillé sur la figure 5. Elle permet de représenter le lien entre les distances mesurées ;
- la figure 7 représente les résultats de mesure de distance sur un dispositif de l'état de l'art, figure 7-A, et sur un dispositif conforme à l'invention, figure 7-B.

### Description détaillée de l'invention

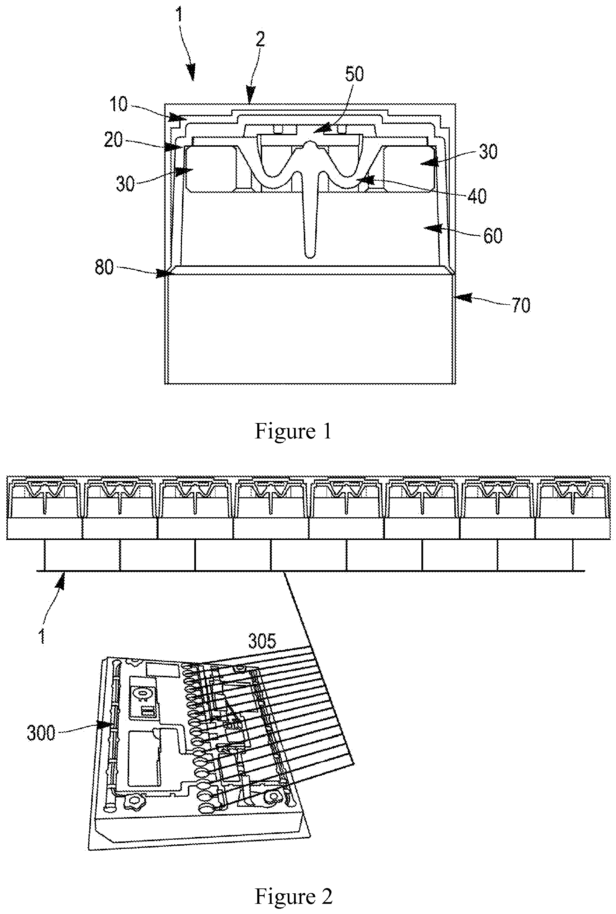

La figure 1 représente une cellule de mesure qui est l'élément de base du dispositif de mesure de l'invention. Cette cellule de mesure est identifiée par la référence générale 1 et est destinée à mesurer par exemple, la distance entre deux surfaces sensiblement parallèles d'un objet comprenant:
- un appareillage de mesure incluant une source magnétique statique permanente 30, un circuit électronique 50 muni d'un capteur à effet Hall, dont le signal de sortie est fonction du champ magnétique généré ;
- une cavité étanche contenant un volume d'air 10 est aménagée entre l'appareillage de mesure et la surface de mesure 2 de la cellule de mesure1.
- la cavité étanche est délimitée par la surface intérieure de la cellule, et par une pièce d'étanchéité 20 qui a un profil homothétique de celui de la cellule de mesure 1 dans sa partie supérieure se trouvant en dessous de la surface de mesure 2, et ladite pièce d'étanchéité 20, dans sa partie inférieure adjacente à la surface de mesure, est munie d'un système d'accrochage (80, 70) étanche à la cellule de mesure 1.
- Un guide de fixation 40 vient appliquer un effort pour maintenir l'appareillage de mesure contre la pièce d'étanchéité 20 dans sa portion centrale au plus près de la surface de mesure 2. La partie inférieure de la pièce d'étanchéité 20 est noyée dans de la résine 60.

La figure 2 représente un boitier de mesure 300 et une pluralité de cellules de mesure 1 alignés. Les cellules de mesure 1 sont destinées à être logées dans des cavités 305 du boitier de mesure 300 prévues à cet effet, comme indiqué sur la figure 2. Une rangée peut contenir jusqu'à 16 cellules de mesure 1. Elles sont espacées d'une distance constante d'environ 35 mm. Dans chacune des cavités 305, les cellules de mesure 1 sont susceptibles de mesurer le champ magnétique local. Ce mode de réalisation du boitier 300 permet d'effectuer une mesure d'épaisseur de couche de gomme d'un pneumatique en plusieurs points, simultanément, le long d'une ligne.

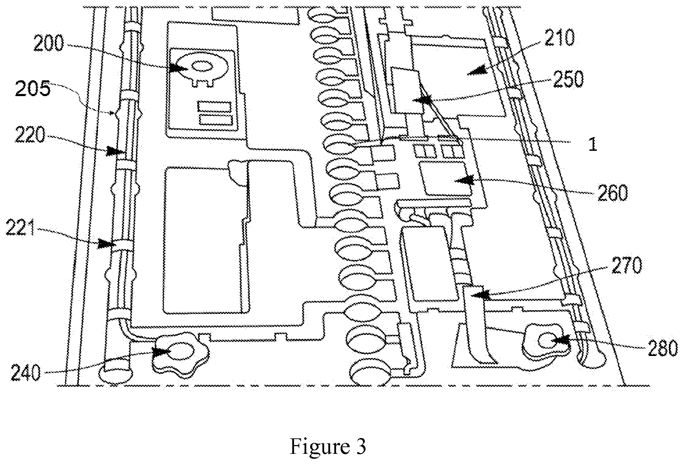

La figure 3 représente un grossissement du boitier de mesure 300 présenté à la figure 2. Le boitier de mesure 300, dans ce mode de réalisation est destiné à être enfoui dans le sol, pour réaliser des mesures sur un pneumatique monté sur un véhicule et qui va rouler sur ledit boitier 300 qui comprend les composantes suivantes :
- Des cellules de mesure 1 dans des cavités du boitier de mesure 300 prévues à cet effet ;
- Des capteurs piézoélectriques 205 sur l'un des bords du boitier de mesure 300 pour détecter la présence d'un pneumatique à mesurer. Une fois activées par la détection d'un pneumatique en présence, les cellules de mesure 1 sont mises en état de veil. Pour renforcer l'étanchéité du boitier de mesure 300, des patch en butyle enrobent les capteurs piézoélectriques 205 en forme de disque plat. Les fils 220 des capteurs piézzoélectriques sont fixés par un collier 221.
- un système d'alimentation électrique 200 connecté au réseau public et doté d'un tranformateur qui permet de fournir au boitier de mesure 300 une alimentation électrique en courant continu. La référence 270 représente le câblage du boitier de mesure 300.
- Une carte mère 260 regroupant les composantes électroniques nécessaires au fonctionnement du boitier de mesure 300. Un dispositif 250 fixe la carte mère au boitier. En particulier la carte mère comprend un microprocesseur pour séquencer les étapes de fonctionnement : le réveil des cellules de mesure 1, la mesure par effet Hall, l'activation et la lecture des capteurs RFID, la mise en format des données, l'émission des données et le retour à l'état de veil.
- Une carte antenne 210 pour dialoguer avec les capteurs RFID dans le pneumatique, et pour se connecter au réseau internet.
- Une gestion de la sortie par un dispositif de connexion à distance pour le post-traitement des données ;
- des mollettes 240 et 280 de la dalle sur la plaque de fabrication

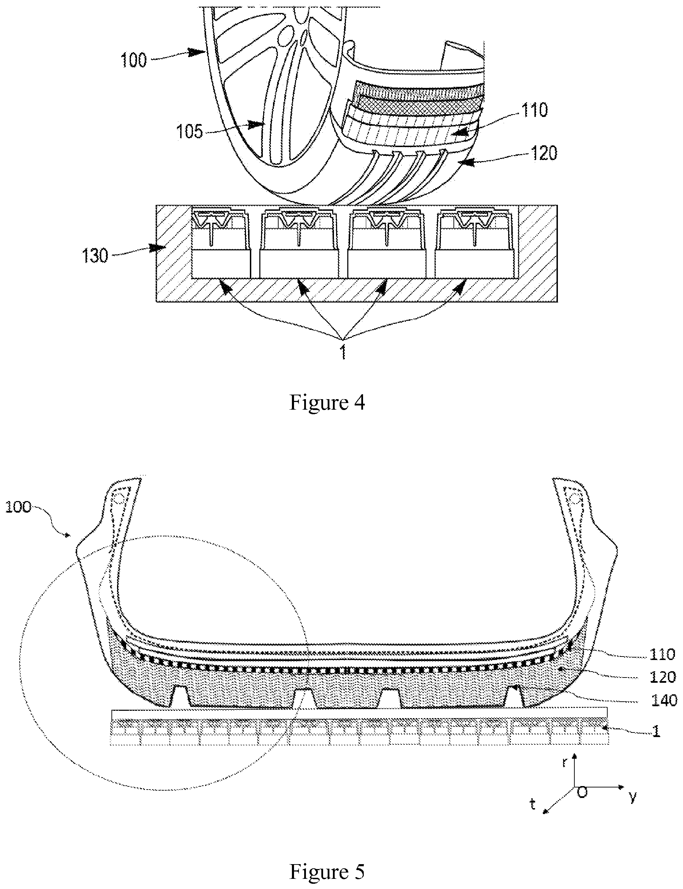

La figure 4 représente un schéma de principe du dispositif de mesure de l'épaisseur de la bande de roulement restante d'un pneumatique. Le pneumatique 100 est monté sur sa jante 105. Radialement intérieurement à la bande de roulement 120, est positionnée une nappe de sommet 110 constituée de renforts métalliques parallèles entre eux, formant un angle avec la direction circonférentielle compris entre 0° et 45°, enrobés dans un mélange élastomérique. Le pneumatique 100 écrasé par la charge du véhicule, roule sur la surface de mesure 2 du boitier de mesure 300 qui est enfoui dans un sol 130.

Le système de mesure est utilisable autant pour un véhicule poids-lourd que pour un véhicule tourisme. La mesure de l'épaisseur restante de matériau caoutchouteux de la bande de roulement est faite lorsque le pneumatique 100 roule au-dessus du boitier de mesure 300 sans qu'il ne soit nécessaire d'arrêter le véhicule ou de démonter le pneumatique du véhicule.

La nappe de sommet 110 comprend des matériaux ferromagnétiques qui sont les renforts métalliques décrits plus haut. La nappe de sommet 110 est donc une bonne conductrice de champ magnétique et une mauvaise conductrice électrique, les lignes de champ vont naturellement chercher à passer par cette armature métallique plutôt que dans l'air, car l'air a une reluctance supérieure à celle de la nappe de sommet. On observe une localisation des lignes de champ magnétique à travers la nappe de sommet 110.

Le mode de fonctionnement du dispositif de mesure de distance selon un objet de l'invention utilise ce principe physique qui est un mode reluctant donc lié à la perméabilité magnétique des différentes parties du circuit magnétique constitué par la source et l'objet dont on mesure la distance avec le capteur.

La figure 5 représente un méridien du pneumatique à mesurer dans l'aire de contact représenté dans un repère cylindrique (O,r,y,t). Le plan méridien est repéré par les directions radial (Or), et axiale (Oy). La direction circonférentielle (Ot) est orthogonale au plan méridien (O,r,y). Le pneumatique 100 comprend une bande de roulement 120, radialement extérieurement à une couche sommet 110. Ladite bande de roulement comprend également des sillons délimitant des fonds de creux 140. Dans l'aire de contact, des méridiens du pneumatique sont en contact avec le boitier de mesure 300 contenant les cellules de mesure 1.

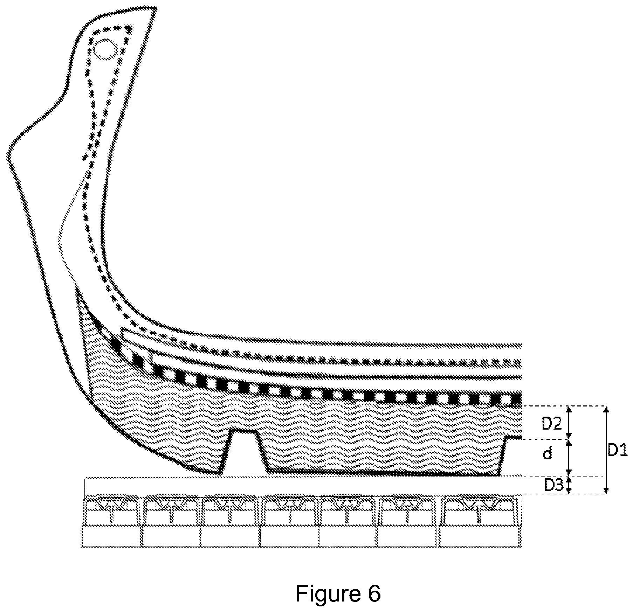

La figure 6 représente un grossissement de la de la zone entourée d'un cercle en pointillé sur la figure 5. Elle permet de représenter le lien entre les distances mesurées.

Chaque cellule de mesure 1 mesure la distance D1 qui la sépare de la nappe sommet 110 du pneumatique 100. D1 a trois composantes. Deux de ces composantes sont fixes, la distance D2 qui sépare le fond des sculptures de la nappe sommet 110, et la distance D3 qui sépare la cellule de mesure 1 de la face d'application du boitier 300. La distance "d" correspond à l'épaisseur restante de la bande de roulement vérifie la relation :

d=D₁-D₂-D₃

La distance D2 peut être connue à partir de l'identification du type de pneumatique mesuré. Cette identification peut être manuelle ou automatique, par exemple en récupérant des données d'identification inscrites dans un transpondeur tel un RFID incorporé dans la structure du pneumatique.

Avec le boitier de mesure 300, la mesure de la distance restante d peut se faire sur toute la largeur de l'aire de contact de manière à établir la cartographie d'usure de la bande de roulement 120.

### Essais

Des essais ont été effectués avec un dipositif de mesure de distance de l'invention, c'est-à-dire avec des cellules de mesures dotés d'un volume d'air aménagé entre l'appareillage de mesure et la surface de mesure de la cellule, de manière à isoler mécaniquement l'appareillage de mesure des sollicitations extérieures. Les résultats de ces essais ont été comparés à ceux obtenus avec des cellules ne comprenant pas ce volume d'air d'isolation de l'appareillage de mesure.

L'appareillage de mesure du dispositif de mesure de l'invention été réalisés avec deux aimants permanents Néodyme-Fer-Bore. Leur géométrie définie par : diamètre extérieur 26,75 mm, diamètre intérieur 16 mm et hauteur 5 mm pour le premier et diamètre extérieur 19,1 mm, diamètre intérieur 9,5 mm et hauteur 6,4 mm pour le second. Le capteur à effet Hall utilisé était de marque Honeywell référence SS39E.

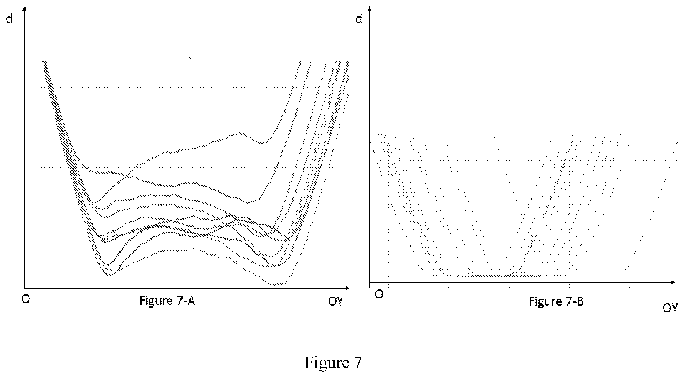

La figure 7 montre l'amélioration qualitative des résultats de mesure obtenue avec l'invention par rapport à l'état de l'art. Sur les deux graphiques 7-A et 7-B les distances mesurant l'épaisseur de la bande de roulement depuis sa surface extérieure jusqu'à la première nappe de sommet dans la direction radiale. L'axe des abcisses représentent la position axiale dans l'aire de contact, et l'axe des ordonnées représentent la distance mesurée de la nappe sommet 110 aux capteurs.

Sur le graphique 7-B, les mesures sont plus nettes, moins brouillées, avec une plus grande précision par rapport à la figure 7-A. Il s'agit ici d'une visualisation de l'amélioration qualitative, même si de façon quantitative, les résultats sont également plus robustes avec le dispositif de l'invention.

## Revendications

1. Dispositif de mesure de la distance entre deux surfaces sensiblement parallèles d'un objet comprenant :
- Une cellule de mesure hermétique (1) ayant au moins une surface plane, formant une surface de mesure (2), ladite cellule de mesure (1) comportant un appareillage de mesure incluant une source de champ magnétique permanent (30), un circuit électronique (50) muni d'un capteur à effet Hall, dont le signal de sortie est fonction du champ magnétique généré (30) ;
- Ladite au moins une surface plane de la cellule de mesure (2) étant destinée à venir en contact d'une surface plane de l'objet ;
- La deuxième surface dudit objet sensiblement parallèle à la première surface dudit objet comprenant une composition à base de matériaux ferromagnétiques ;
- Une variation du champ magnétique étant générée lors d'un appui de l'objet sur la cellule de mesure (2) ;
- une cavité étanche remplie d'un volume d'air (10) étant aménagée entre l'appareillage de mesure et la surface de mesure (2) de la cellule (1),
**ledit dispositif étant caractérisé en ce qu'**il comprend un guide de fixation (40) exerçant un effort pour maintenir en partie l'appareillage de mesure contre une pièce d'étanchéité (20) dans sa portion centrale au plus près de la surface de mesure (2) et **en ce que** la cavité étanche est délimitée par la surface intérieure de la cellule de mesure, et par la pièce d'étanchéité (20) qui a un profil homothétique de celui de la cellule de mesure dans sa partie supérieure se trouvant en dessous de la surface de mesure (2), et ladite pièce d'étanchéité (20), dans sa partie inférieure adjacente à la surface de mesure, est munie d'un système d'accrochage (80) étanche à la cellule de mesure.

2. Dispositif de mesure de distance selon la revendication 1, dans lequel, la partie inférieure de la pièce d'étanchéité (20) est noyée dans une résine (60).

3. Dispositif de mesure de distance selon l'une des revendications 1 à 2, dans lequel, la source de champ magnétique permanent (30) est constituée d'au moins une bobine alimentée par un courant électrique continu.

4. Dispositif de mesure de distance selon l'une des revendications 1 à 2, dans lequel, la source de champ magnétique permanent (30) est constituée par une pluralité d'aimants permanents disposés en ligne.

5. Dispositif de mesure de distance selon l'une quelconque des revendications précédentes, dans lequel la cellule de mesure est disposée à l'intérieur d'un boitier de mesure (300) non conducteur électrique et dont les matériaux ont une susceptibilité magnétique nulle ou suffisamment faible pour être assimilable à de l'air ou du vide.

6. Dispositif de mesure de distance selon la revendication 5, comprenant une pluralité de cellules de mesure (1), alignées, installées dans un boitier de mesure de manière à coopérer pour mesurer la distance entre les deux surfaces sensiblement parallèles en plusieurs points de mesure.

7. Dispositif de mesure de distance selon la revendication 5 dans lequel, le boitier de mesure (300) est disposé sur ou encastré dans un sol de roulage (130) d'un pneumatique.

8. Dispositif de mesure de distance selon la revendication 5, tel que ledit boitier de mesure (300) est un boitier portatif.

## Patentansprüche

1. Vorrichtung zum Messen des Abstands zwischen zwei im Wesentlichen parallelen Flächen eines Objekts, beinhaltend:
- eine hermetisch geschlossene Messzelle (1), die mindestens eine ebene Fläche aufweist, die eine Messfläche (2) bildet, wobei die Messzelle (1) eine Messeinrichtung mit einer Permanentmagnetfeldquelle 10 (30), einer elektronischen Schaltung (50), die über einen Hall-Effekt-Sensor verfügt, dessen Ausgangssignal von dem erzeugten Magnetfeld (30) abhängt, umfasst;
- wobei die mindestens eine ebene Fläche der Messzelle (2) dazu bestimmt ist, mit einer ebenen Fläche des Objekts in Kontakt zu kommen;
- wobei die zweite Fläche des Objekts, die zu der ersten Fläche des Objekts im Wesentlichen parallel ist, eine Zusammensetzung auf Basis von ferromagnetischen Materialien beinhaltet;
- wobei eine Magnetfeldänderung erzeugt wird, wenn das Objekt auf der Messzelle (2) aufliegt;
- wobei ein mit einem Luftvolumen gefüllter dichter Hohlraum (10) zwischen der Messeinrichtung und der Messfläche (2) der Zelle (1) eingerichtet ist,
wobei die Vorrichtung **dadurch gekennzeichnet ist, dass** sie eine Befestigungsführung (40) beinhaltet, die eine Kraft ausübt, um die Messeinrichtung an ihrem der Messfläche (2) am nächsten liegenden mittleren Abschnitt teilweise an einem Dichtungselement (20) zu halten, und dass der dichte Hohlraum durch die Innenfläche der Messzelle und durch das Dichtungselement (20), welches an seinem oberen Teil, der sich unterhalb der Messfläche (2) befindet, ein zu dem Profil der Messzelle homothetisches Profil aufweist, begrenzt wird und das Dichtungselement (20) an seinem unteren Teil benachbart zu der Messfläche über ein System zur dichten Kopplung (80) mit der Messzelle verfügt.

2. Vorrichtung zum Messen eines Abstands nach Anspruch 1, wobei der untere Teil des Dichtungselements (20) in ein Harz (60) eingebettet ist.

3. Vorrichtung zum Messen eines Abstands nach einem der Ansprüche 1 bis 2, wobei die Permanentmagnetfeldquelle (30) aus mindestens einer Spule besteht, die mit Gleichstrom versorgt wird.

4. Vorrichtung zum Messen eines Abstands nach einem der Ansprüche 1 bis 2, wobei die Permanentmagnetfeldquelle (30) aus einer Vielzahl von in Reihe angeordneten Permanentmagneten besteht.

5. Vorrichtung zum Messen eines Abstands nach einem der vorhergehenden Ansprüche, wobei die Messzelle innerhalb eines elektrisch nicht leitenden Messgehäuses (300) angeordnet ist, dessen Materialien eine magnetische Suszeptibilität aufweisen, die gleich Null oder so gering ist, dass sie mit Luft oder Vakuum vergleichbar ist.

6. Vorrichtung zum Messen eines Abstands nach Anspruch 5, beinhaltend eine Vielzahl von aufgereihten Messzellen (1), die in einem Messgehäuse installiert sind, um zusammenzuwirken, um den Abstand zwischen den zwei im Wesentlichen parallelen Flächen an mehreren Messpunkten 35 zu messen.

7. Vorrichtung zum Messen eines Abstands nach Anspruch 5, wobei das Messgehäuse (300) auf einem Rollboden (130) eines Reifens angeordnet oder darin eingelassen ist.

8. Vorrichtung zum Messen eines Abstands nach Anspruch 5, wobei das Messgehäuse (300) ein tragbares Gehäuse ist.

## Claims

1. Device for measuring the distance between two substantially parallel surfaces of an object, the said device comprising:
- A hermetic measurement cell (1) having at least one flat surface, forming a measurement surface (2), the said measurement cell (1) having a measuring apparatus including a permanent magnetic field source (30), an electronic circuit (50) equipped with a Hall effect sensor, the output signal of which depends on the magnetic field generated (30);
- The said at least one flat surface of the measurement cell (2) being intended to come into contact with a flat surface of the object;
- The second surface of the said object, which is substantially parallel to the first surface of the said object, comprising a composition based on ferromagnetic materials;
- A variation in the magnetic field being generated when the object is resting on the measurement cell (2);
- a sealed cavity filled with a volume of air (10) being formed between the measuring apparatus and the measurement surface (2) of the cell (1),
**the said device being characterized in that** it comprises a fastening guide (40) that exerts a force to partially hold the measuring apparatus against a sealing part (20) in its central portion closest to the measurement surface (2) **and in that** the sealed cavity is delimited by the inner surface of the measurement cell, and by the sealing part (20), which has a profile that is homothetic to that of the measurement cell in its upper section located below the measurement surface (2), and the said sealing part (20), in its lower section adjacent to the measurement surface, is equipped with an attachment system (80) which is sealed in relation to the measurement cell.

2. Distance measuring device according to Claim 1, **wherein** the lower section of the sealing part (20) is embedded in a resin (60).

3. Distance measuring device according to one of Claims 1 to 2, **wherein** the permanent magnetic field source (30) is made up of at least one coil supplied with a direct electric current.

4. Distance measuring device according to one of Claims 1 to 2, **wherein** the permanent magnetic field source (30) is made up of a plurality of permanent magnets disposed in a line.

5. Distance measuring device according to any one of the preceding claims, **wherein** the measurement cell is disposed inside a measurement unit (300) which is not electrically conductive and the materials of which have a magnetic susceptibility which is zero or low enough to be similar to air or a vacuum.

6. Distance measuring device according to Claim 5, comprising a plurality of aligned measurement cells (1) installed in a measurement unit so as to interact to measure the distance between the two substantially parallel surfaces at multiple measurement points.

7. Distance measuring device according to Claim 5, **wherein** the measurement unit (300) is disposed on or embedded in a ground (130) over which a tyre is driven.

8. Distance measuring device according to Claim 5, such that the said measurement unit (300) is a portable unit.
